# EUROPEAN PATENT APPLICATION

(11) **EP 2 166 709 A1**
(43) Date of publication of application: **24.03.2010**
(21) Application number: 08164733.1
(22) Date of filing: 19.09.2008
(51) Int. Cl.: H04L 12/413, G06K 7/00, H04L 12/40

(54) **Data communication in a tracking system for a conveyor system**

(71) Applicant: OCS Overhead Conveyor System Aktiebolag, 504 94 Borås (SE)
(72) Inventor: Kry, Lars, 506 36 Borås (SE)
(74) Representative: Edlund, Fabian

(57) **Abstract**

Communication of data from an RFID reader in a tracking system (10) in a conveyor system (20), the tracking system (10) comprising a plurality of RFID readers (12a-c) adapted to receive data from RFID tags (11a-b) arranged in the conveyor system, and connected to a serial bus (13) controlled by a bus controller (14). The method comprises detecting (303) whether the serial bus (13) is in a busy state or in an idle state, repeating the step of detecting whether the serial bus (13) is in a busy state or in an idle state until the serial bus (13) is in an idle state; and transmitting (304) the data to the bus controller (14) via the serial bus (13).

This provides a simple collision handling, without involving the bus controller.

## Description

### Technical Field

The present invention relates to communication of data from an RFID reader in a tracking system in a conveyor system.

### Background of the Invention

Tracking systems may be advantageous in conveyor systems in order to track goods conveyed by the system, or the carriers themselves, e.g. to determine their location and destination. Information from the tracking system may be used by a control system of the conveyor system, for example to control the switches of the rail.

Tracking systems in conveyor systems conventionally track devices by means of scanning bar codes. However, radio frequency identification (RFID) has become increasingly interesting due to for example the ability to read data of an RFID tag from a greater distance. Typically, the RFID readers in such a system each connected separately to a controller via one or more connection boxes. The controller sequentially requests information from each RFID reader. A problem with this type of polling system is that information is not obtained with sufficient efficiency.

An example of a system where several RFID readers are connected to a bus network is described in US2006/02904703. However, US2006/02904703 fails to disclose how sufficient communication is achieved from the various RFID readers.

### Summary of the Invention

It is an object of the present invention to at least partly overcome the above-mentioned problem, and to provide an improved method for conveyor tracking, which method in particular efficiently provides real-time data.

This and other objects that will be apparent from the following description are achieved by a method and system according to the appended independent claims 1 and 8, respectively. Advantageous embodiments are set forth in the appended dependent claims.

According to an aspect of the present invention, there is provided a method for communicating data from an RFID reader in a tracking system in an overhead conveyor system. The tracking system comprises a plurality of RFID readers adapted to receive data from RFID tags (11a-b) arranged in the conveyor system, and connected to a serial bus which is controlled by a bus controller. The method comprises the steps of detecting whether the serial bus is in a busy state or in an idle state, repeating the step of detecting whether the serial bus is in a busy state or in an idle state until the serial bus is in an idle state; and transmitting the data to the bus controller via the serial bus.

According to the present invention each RFID reader of the tracking system is a "master node" in the sence that it is able to initiate transmission on the bus. The RFID readers actively initiating communication provides an improved real-time communication with the controller, as well as the possibility for messages to be received by the controller in the same order as they were transmitted by the RFID readers. This is advantageous compared to a polling system, where the sequential order of the polling will determine which information is received first.

There are prior art serial buses with a plurality of nodes (multi-drop bus) that can communicate in a similar manner, such as CAN buses. However, the method of the present invention differs from a CAN-protocol in that each RFID reader detects whether the bus is busy or idle before transmitting the data. This provides a simple collision handling, without involving the bus controller. If an RFID reader detects that the serial bus is busy by transmission from another RFID reader or from the bus controller, it waits until the bus is idle, and transmits its data when it is. Such relatively simple collision handling is sufficient in a tracking system of a conveyor system, since the message frequency, and thus the risk for potential collisions, typically is relatively low.

An "RFID tag" is here any kind of RFID tag, such as a non-active or an active RFID tag.

The method may further comprise, prior to the step of transmitting the data to the controller via the serial bus, waiting a predefined time period, and again detecting whether said serial bus is in a busy state or in an idle state.

This forms a basis for an improved collision handling when several RFID readers attempt to transmit data simultaneously. Collisions may be avoided by utilizing variable predefined waiting times for different RFID readers. By way of example, if two RFID readers both has detected that the bus is idle a first time, both will wait a predefined time before again detecting if the bus is busy or idle. The RFID reader with the shortest waiting time will hence be the first one to again detect that the bus is idle after a predefined waiting time period, and transmit its data to the controller. The other RFID reader will, after its predefined waiting time period, detect that the bus is busy, and must make another attempt to transmit data.

Preferably the predefined time period is decreased each time the step of waiting a predefined time period occurs. Accordingly, the more times an RFID reader repeatedly has detected that the serial bus is busy, the shorter its waiting time will be, and the more likely it will be to transmit its data before another RFID reader (that has not detected that the serial bus is busy as many times). This is advantageous since no message will be lost or get a disproportionate long waiting time due to random factors.

Moreover, the predefined waiting time period for a first group of RFID tags may differ from the predefined waiting time period for a second group of RFID tags. This enables messages to be transmitted to the controller in a priority order based on which RFID tag the data emanates from.

Additionally or alternatively, the predefined waiting time period for a first group of RFID readers may differ from the predefined waiting time period for a second group of RFID readers. This enables messages to be transmitted to the controller in a priority order based on the reader location along the rail. For example, information from readers immediately before track switches may be prioritized.

In a preferred embodiment of the method of the present invention, the method may further comprise, prior to detecting the state of the serial bus, receiving a signal from an RFID tag, which has entered a reading range of the RFID reader, decoding and adapting data from the RFID tag to serial bus format.

Furthermore, the RFID reader may repeatedly attempt to transmit the data until occurrence of one of the following events: receiving a confirmation message from the controller, and expiration of a time period after said RFID tag has left the reading range of the RFID reader. As the transmission time is much shorter than the time it takes for an RFID tag to pass through the reading range of an RFID reader, the RFID reader will have time to transmit its data many times.

According to another aspect of the present invention, there is provided a system for tracking carriers of a conveyor system, comprising an RFID tag attached to each carrier, a plurality of RFID readers, a serial bus connected to the RFID readers, and a bus controller arranged to control the bus. Each RFID reader is adapted to detect whether the serial bus is in a busy state or in an idle state, repeat the step of detecting whether the serial bus is in a busy state or in an idle state until the serial bus is in an idle state, and then transmit the data to said controller via the serial bus.

Further advantages and features of this aspect of the present invention are analogous to those described above in connection with the first aspect of the invention.

### Brief description of the drawings

In the following, embodiments of the present invention will be described in detail, with reference to the accompanying, exemplifying drawings on which:
Figures 1a-b are block diagram illustrating an overview of an example of a conveyor system, in two different stages, in which the tracking system of the present invention can be used.
Figure 2 is a block diagram of an RFID reader.
Figure 3 is a flow chart schematically illustrating an exemplary method of the present invention.
Figure 4 is a flow chart schematically illustrating another exemplary method of the present invention

### Detailed description of preferred embodiments

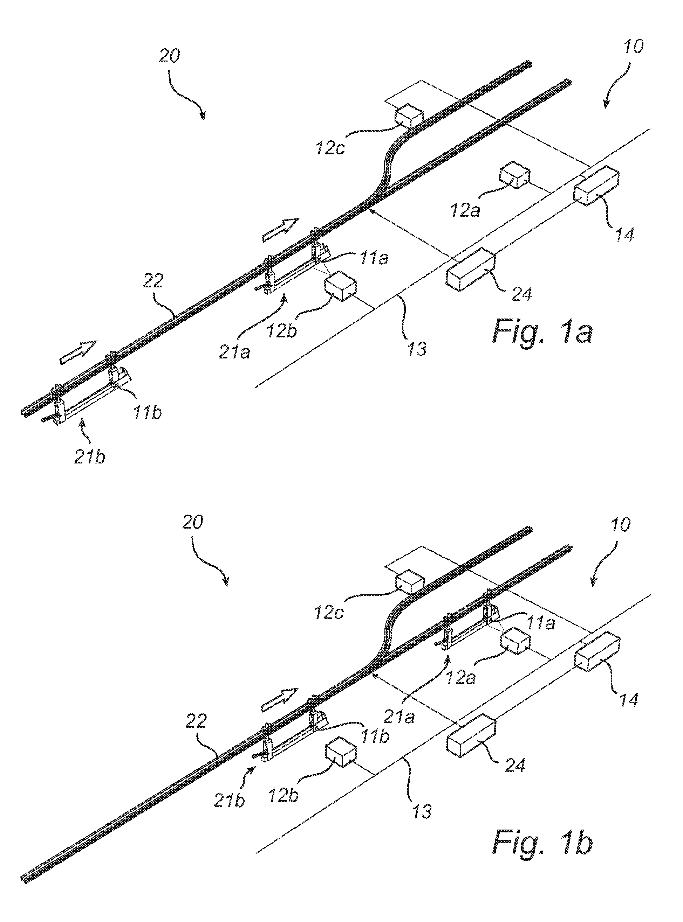

An overview of a portion of an example overhead conveyor system 20 in which the tracking system 10 of the present invention can be used is illustrated in figure 1a-b.

The illustrated overhead conveyor system 20 comprises a number of carriers 21a-b that move along a rail 22 in a direction illustrated by the arrows. The tracking method of the present invention is suitable for various overhead conveyor systems, for example for a system where each carrier has two drive carriages in series like in the illustrated example. Two overhead conveyor systems of this type are disclosed in WO 05/007542 and WO 03/097494, both herewith incorporated by reference.

Each carrier 21a-b in the illustrated example has an RFID tag 11a-b attached thereon, and the tracking system comprises a plurality of RFID readers 12a-c. The RFID readers 12a-c are arranged on successive stages along the conveyor rail 22, each RFID reader 12a-c covering a section of the rail 22 that is comprised in its reading range. Each RFID reader is further adapted to receive a signal comprising tag identification and other information, such as destination and content information, from a RFID tag within its reading range.

To attach the RFID tags on the carriers is advantageous when the tracking system is installed in order to track the carriers themselves, and thus forms an integral part of the conveyor system installation. Alternatively, of course, the RFID tags can be attached on goods conveyed by the conveyor system. The principle of the tracking system will remain essentially the same, albeit with the difference that it will be tracking the goods on the carriers instead of the carriers themselves.

The tags 11a-b may be passive, which means that they are only activated when exposed to radiation from an RFID reader 12a-c. However, it is also possible to employ active tags having their own power source, and hence the ability to broadcast signals to the RFID readers.

The RFID readers 12a-c are connected to a bus controller 14 of the tracking system 10 via a multi-drop serial bus 13, e.g. an RS-484.

When an RFID tag 11a-b enters the reading range of an RFID reader 12a-c the signal from the tag will be received by the RFID reader 12a-c and decoded before it is transmitted to the bus controller 14. The bus controller 14 in its turn is connected to a main control system 24 for controlling the conveyor system 20. In other words, the purpose of the tracking system 10 is to provide the main control system 24 with tracking information in real-time via the controller 14, so that the main control system 24 may control the conveyor system 20, such as switches, motors and drives according to received tracking information. The transmission of data between the controller 14 and the main control system 24 may be provided by any suitable communication interface, such as a serial bus, e.g. RS-232, or by wireless communication, e.g. WLAN to give some examples.

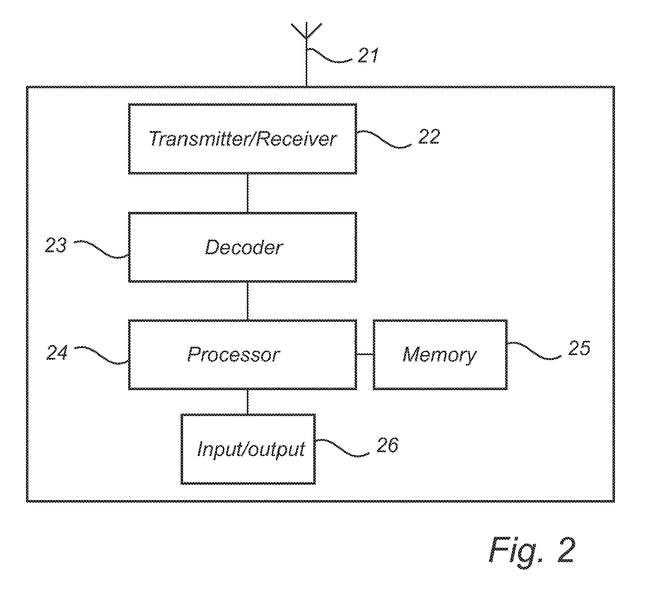

Fig. 2 is a block diagram of an RFID reader. As illustrated the RFID reader comprises an antenna 21, a transmitter/receiver 22, a decoder 23, a processor 24, a memory 25, and a bus interface 26. The processor 24 is adapted to execute program code stored in the memory 25, and control the bus interface 26 accordingly. In operation, the transmitter/receiver 22 reads an RFID tag signal within its reading range by means of the antenna 21. The read signal is decoded and adapted by the decoder 23 to serial bus format. The processor 24 may process the data in accordance with the executed program, and the data may also be stored temporarily in the memory 25. The data is then transmitted to the bus controller 14 via the serial bus 13, via which serial bus a confirmation message from the controller is later received.

Furthermore, the different states of an RFID reader may be visually indicated, typically by means of lighting means, such as LEDs. Different states may hence be indicated by differently colored LEDs.

Returning to fig 1a-b a switch 23 is arranged on the rail 22 where it is possible to switch between two branches of the track. In fig. 1a a first carrier 21a has entered the reading range of an RFID reader 12b, which is arranged by the rail 22 to track carriers 21a-b before the switch 23. The carrier 21a is hence tracked by means of the RFID reader 12b receiving a signal from the RFID tag 11a that is arranged on the carrier 21a. The RFID reader 12b then decodes and adapts the signal from the RFID tag 11a into serial bus format and transmits the data to the bus controller 14. The data is resent until a confirmation message is received from the bus controller 14, or until a timeout of for example 1 second has passed after the RFID tag 11a has left the reading range of the RFID reader 12b.

A typical message from the RFID reader to the controller contains a head including package definition, node address and message type, and also a check sum for error control in addition to the ID data for identification of the read RFID tag.

After having received the identification data or other information data associated to the RFID tag 11a from the RFID reader 12b the bus controller 14 sends the information to the main control system 24. The main control system 24 controls the switch 23 so that it is switched to the correct rail branch based on the identification data of the RFID tag 11a.

In fig. 1b, the carrier 21a is tracked again like described in fig. 1a, but at another stage of the rail 22, after the switch 23, and accordingly by another RFID reader 12a. From the data originating from the RFID tag 11a being read at this stage, and transmitted by the RFID reader 12a, the controller 14 may get information about if the carrier 21a is heading in the correct direction or not also after it passed the switch 23.

In a typical example the controller 14 has four bus channels, and each channel may be connected to 32 nodes of RFID readers. Accordingly, there may be as many as 128 RFID readers in this tracking system. About 30 messages per minute may be transmitted from the RFID readers, and as many messages may be transmitted from the controller to the RFID readers per minute. Consequently, message collisions may occur and must be handled by the tracking system.

As an example, in fig. 1b the two illustrated RFID readers 12a-b may attempt to transmit data to the controller simultaneously, whereby a collision of the two messages is possible. According to the present invention, collision handling is therefore provided in the RFID reader.

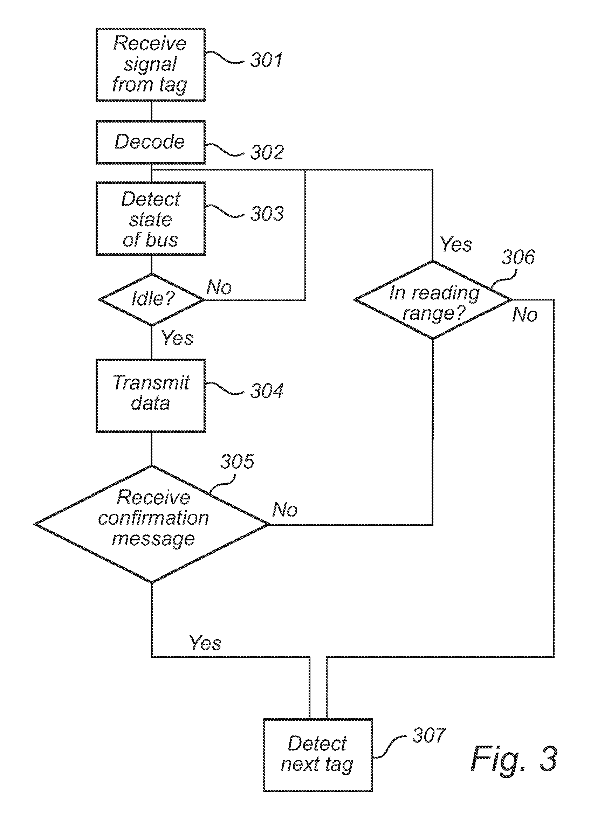

An example of the method for communicating data from an RFID reader of a tracking system of the present invention will now be described with reference to fig 3 which is a flow chart schematically illustrating such a method. The method can be implemented in the RFID reader by storing computer program code in the memory 25, to be executed by the processor 24. The processor will control the input/output device 26 to perform the method described below. OF course, the method according to the invention may be executed using any combination of software and hardware.

In a first step 301, the RFID reader receives a signal from an RFID tag, which has entered the reading range of the RFID reader. Thereafter, in step 302, the RFID reader decodes the signal and adapts it to serial bus format. In step 303, the RFID reader detects whether the serial bus is busy or idle. If the serial bus is in a busy state, the RFID reader repeatedly detects the state of the bus until it is idle. In the following step 304, the RFID reader transmits the data to the controller, via the serial bus. Through this process, the transmission from one RFID reader will not be interrupted by a transmission from another RFID reader.

When the data is received by the bus controller 14, it will immediately transmit a confirmation message, or acknowledgement. Preferably, the controller will also detect the state of the bus, and wait until the bus is idle, in order to avoid a collision with data transmitted by the readers.

In case the transmission was successful the RFID reader will thus receive a confirmation message from the controller in step 305. In case there is no confirmation message, the RFID reader repeatedly attempts to transmit the data, by repeating steps 303-305, until the confirmation message is received in step 305.Program control then proceeds to step 307, where it waits for a new RFID tag to be detected.

For each repetition, it is verified in step 306 that the current RFID tag is still within the reading range of the RFID reader. After the RFID tag has left the reading range of the reader, the reader may continue to repeat the steps 303-305 for a predetermined time out period. After time out, program control proceeds to step 307.

The transmission time is much shorter than the time it takes for an RFID tag to pass through the reading range of an RFID reader. Consequently, the RFID reader may attempt to transmit the data several times.

Although eliminating most collisions, there may still be situations that the above method will not handle satisfactorily. For example, if several readers attempt to transmit when the bus is busy, they will all enter identical waiting loops. When the bus goes idle, which reader that gets a cahnce to transmit will be decided by their relative position in the waiting loop.

Therefore, a more efficient collision handling may be advantageous, for which reason the method described in fig. 3 may be further extended.

According to one embodiment of the invention, the program controlling the input/output unit 26 is adapted to act differently depending on whether the bus is idle immediately in step 303, or whether the bus is idle after a loop in step 303.

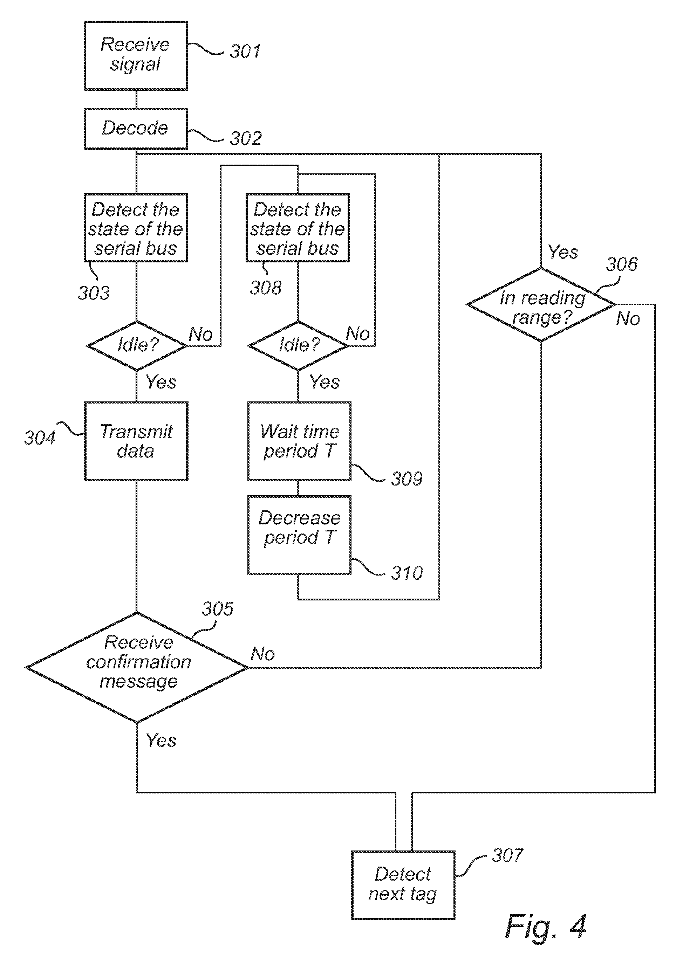

This can be ensured in different ways, and one example is illustrated in figure 4. Steps equivalent of those in fig. 3 are denoted by the same numerals.

In the method in fig. 4, if the bus is busy in the step 303, program control continues to step 308, where the RFID reader waits until it's the bus is idle. When the bus is idle, the program control continues to step 309, where it waits a predetermined time period T, before returning to step 303, to once again detect the status of the bus. Note that step 308 is performed if and only if the bus is idle after a busy period. Instead of implementing this as two separate detection steps, 303 and 308, the program may be adapted to check if the idle state has been detected immediately or after a number of loops. This is just a design choice by the programmer.

The predefined time period T may be set in order to prioritize for example certain RFID readers, e.g. according to location, or certain RFID tags, e.g. according to content. Or, the order of transmission may depend on variable predetermined time periods, so that each RFID reader get to transmit the data to the controller in the same order in which the RFID readers started their attempts to transmit data.

Alternatively, and as illustrated in figure 4 by the optional step 10, the predefined time period T may be decreased each time step 309 is completed, that is each time the RFID reader attempts to transmit its data and detects that the serial bus is busy. In this manner, the waiting time will be shorter for an RFID reader that has attempted to transmit its data several times than for another RFID reader that has attempted to transmit its data fewer times.

The bus controller 14 is preferably not arranged to perform any similar waiting step, and acknowledgements from the bus controller 14 are thus given highest priority. This is reasonable, as acknowledgements should be provided as quickly as possible, in order to allow the readers to proceed to detecting the next tag. Also, acknowledgement messages are typically much shorter than the data from the readers, so that they will not interfere seriously with the data traffic from the readers.

The person skilled in the art realizes that the present invention is not limited to the preferred embodiments. For example the RFID tag may comprise any kind of data which may be useful when tracking the carriers, such as content data, data of origin, data of final destination, etc. There may be a plurality of groups of for example RFID tags having different predefined waiting time periods. And the specifically important stage of the rail may be of any kind, which is critical in the concerned application.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A method for communicating data from an RFID reader in a tracking system (10) in a conveyor system (20), said tracking system (10) comprising a plurality of RFID readers (12a-c) adapted to receive data from RFID tags (11a-b) arranged in the conveyor system, and connected to a serial bus (13) controlled by a bus controller (14), the method comprising the steps of:
detecting (303) whether said serial bus (13) is in a busy state or in an idle state;
repeating said step of detecting whether said serial bus (13) is in a busy state or in an idle state until the serial bus (13) is in an idle state; and
transmitting (304) said data to said bus controller (14) via said serial bus (13).

2. The method according to claim 1, further comprising, prior to the step of transmitting (304) said data to said bus controller (14):
waiting (step 309) a predefined time period, and
confirming (step 303) that said serial bus (13) is in an idle state.

3. The method according to claim 2, wherein, if the serial bus (13) is not in an idle state, the step of waiting (309) is repeated.

4. The method according to claim 3, wherein said predefined time period is decreased (step 310) each time the step of waiting (309) is repeated.

5. The method according to claim 2 or 3, wherein said predefined waiting time period for a first group of RFID tags (11a-b) differs from said predefined waiting time period for a second group of RFID tags (11a-b).

6. The method according to any of claim 2 to 3 wherein said predefined waiting time period for a first group of RFID readers (12a-c) differs from said predefined waiting time period for a second group of RFID readers (12a-c).

7. The method according to any one of the preceding claims, further comprising the steps of:
receiving (301) a signal from an RFID tag (11a-b), which has entered a reading range of said RFID reader (12a-c);
decoding and adapting (302) data from the RFID tag (11a-b) to serial bus format.

8. The method according to any of the preceding claims wherein said RFID reader repeatedly attempts to transmit said data until occurrence of one of the following events:
receiving (305), in case of correct data reception, a confirmation message from said controller (14), and
expiration of a time out period after said RFID tag (11a-b) has left the reading range of said RFID reader (12a-c).

9. An RFID reader adapted to receive data from an RFID tag in a conveyor system, said RFID reader (12) being connectable to a serial bus (13) and adapted to
detect whether a serial bus (13) connected to said reader (12) is in a busy state or in an idle state;
repeat said step of detecting whether said serial bus is in a busy state or in an idle state until the serial bus (13) is in an idle state; and
transmit said data on said serial bus (13).

10. A tracking system for a conveyor system, comprising:
a plurality of RFID readers (12a-c) according to claim 9,
a plurality of RFID tag (12a-c) arranged in the conveyor system;
a serial bus (13) connected to said RFID readers.

11. The tracking system in claim 10, further comprising a bus controller (14) arranged to control the bus (13).

12. A computer program product, comprising computer program code portions adapted to perform the method according to one of claims 1-8 when executed on a computer processor (24) of an RFID reader (12).
